# EUROPEAN PATENT APPLICATION

(11) **EP 4 306 940 A1**
(43) Date of publication of application: **17.01.2024**
(21) Application number: 22185292.4
(22) Date of filing: 15.07.2022
(51) Int. Cl.: G01N 21/77, G01N 21/25

(54) **DEVICE FOR USE IN THE DETECTION OF BINDING AFFINITIES**

(71) Applicant: lino Biotech AG, 8092 Zürich (CH)
(72) Inventor: Frutiger, Andreas, 8049 Zürich (CH)
(74) Representative: Bohest AG

(57) **Abstract**

A device for use in the detection of binding affinities comprises a substrate, and a slab waveguide arranged on the substrate and extending in a longitudinal direction. The slab waveguide (2) comprises an outer surface (20) opposite to the surface facing the substrate. An optical coupler (4) is arranged on the slab waveguide such that the coherent light propagates in the longitudinal direction through the slab waveguide, with an evanescent field of the coherent light propagating along the outer surface of the slab waveguide. At least one sensing spot (3) is arranged on the outer surface (20) of the slab waveguide. The sensing spot comprises affinity elements capable of binding with target molecules, wherein the affinity elements are arranged along a plurality of decoupler lines (34) arranged to form a decoupler grating when the target molecules are bound to the affinity elements. The at least one sensing spot comprises a first straight boundary (30) and a second straight boundary (31) which are arranged parallel to one another and extend in the longitudinal direction, and wherein each decoupler line of the plurality of decoupler lines (34) extends from the first straight boundary (30) to the second straight boundary (31).

## Description

The present invention relates to a device for use in the detection of binding affinities and a system for the detection of binding affinities.

A variety of such devices has been devised in the prior art. These devices are used, for example, as (bio)sensors in a range of applications, such as the detection of sample concentrations, kinetic constants, sample identification and in particular in the detection or monitoring of binding affinities.

The variety of such devices includes devices that require the use of labels attached to target molecules, the labels being capable of emitting fluorescent light upon excitation. The binding of a target molecule to an affinity element is detected based on a characteristic emission spectrum of the fluorescent light which is indicative of the binding of the labelled target molecule to an affinity element. Such sensors are disadvantageous in that the detected signal is generated by the labels rather than by the binding partners themselves.

Another type of device detects the binding of the target molecules to the affinity elements by detecting light that is scattered by the target molecules bound to affinity elements. This type of device comprises affinity elements arranged on a surface of the device that are capable of binding with target molecules. The affinity elements lead either to the attachment or to a minimum residence time of a particular target molecules to the affinity elements. The binding of the target molecules to the affinity elements is detected, and the information about the binding of the target molecule to the affinity element is used to detect the binding affinity of the target molecules and the affinity elements (for example the ratio of the product of the (equilibrium) concentrations of the free target molecules and the free affinity elements over the (equilibrium) concentrations of the target molecules bound to the affinity elements). Such a device is described, for instance, in WO 2013/107811 A1, or in DE 10 2020 212 029 A1 and DE 10 2020 212 031 A1. The device described therein comprises a slab waveguide arranged on a substrate, wherein coherent light of a predetermined wavelength is coupled into the slab waveguide and propagates through the slab waveguide, with an evanescent field of the coherent light propagating along an outer surface of the slab waveguide. The affinity elements are arranged along well-defined lines within sensing spots which are arranged on an outer surface of the slab waveguide to form a decoupler grating when the target molecules are bound to the affinity elements. The purpose of the decoupler grating is to decouple a portion of the coherent light propagating through the slab waveguide. Typically, the decoupled portion of the coherent light is guided to a detection location, where the intensity of the decoupled light is measured. The measured intensity of the decoupled portion of the coherent light in relation to the intensity at the location of the respective sensing spot of the coherent light propagating through the slab waveguide - i.e. the diffraction efficiency - is representative of the mass of the target molecules bound to the affinity elements.

It may be beneficial to have a plurality of sensing spots arranged on the outer surface of the slab waveguide, as this may allow for an improvement of the measurement statistics inasmuch as the statistics contains a larger number of measurements. Furthermore, having a plurality of sensing spots arranged on the slab waveguide offers the possibility to detect different target molecules by different affinity elements arranged in the different individual sensing spots of the plurality of sensing spots.

Typically, the sensing spots are of circular shape, as described for instance in WO 2013/107811 A1, or in DE 10 2020 212 029 A1 and DE 10 2020 212 031 A1, which is beneficial for focusing the decoupled light to an Airy disc at the detection location. However, the circular shape of the sensing spots has the disadvantage that the wavefront of the coherent light propagating through the slab waveguide may get distorted. More precisely, that portion of the coherent light not decoupled by the decoupler grating of an individual sensing spot (which is the vast majority of the coherent light) propagates across the sensing spot and - due to the circular shape of the sensing spot - may lead to a distortion of the wavefront and to a convergence of the coherent light further propagating through the slab waveguide.

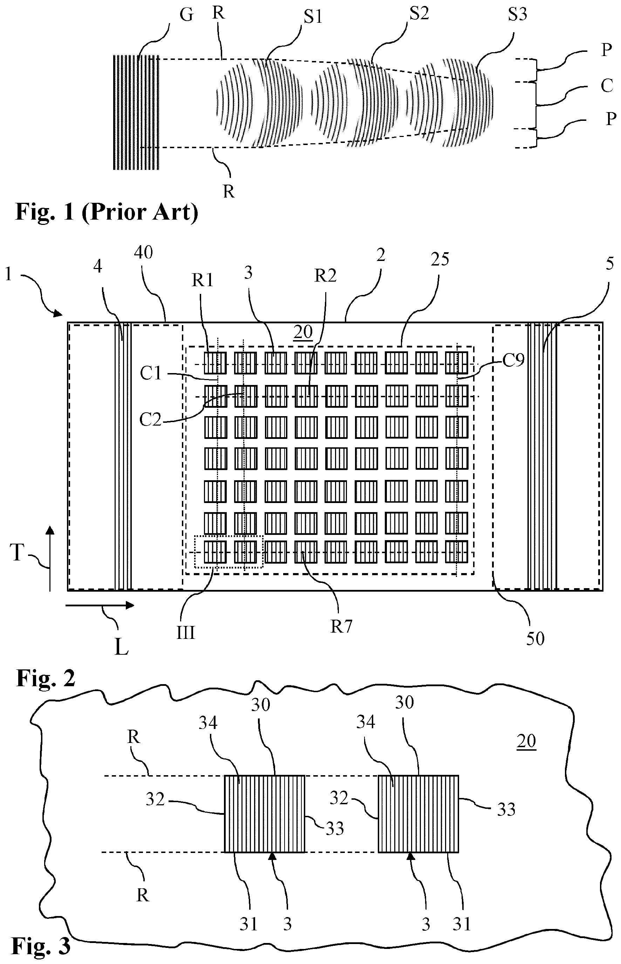

The phenomenon of wavefront distortion and the consequence resulting therefrom become more evident when glancing at **Fig. 1****.** The dashed lines R represent two outer rays of the coherent light coupled into the slab waveguide by an optical coupling grating G and traversing across three circular sensing spots S1, S2, S3 which are arranged one after another in the direction of the propagation of the coherent light (in Fig. 1 from left to right). The convergence of the two outer rays R of the coherent light shown in Fig. 1 may lead to a non-uniform illumination of the circular sensing spots S2, S3, so that - for example - the peripheral portions P and the central portion C of the sensing spot S3 are non-uniformly illuminated. Or more frankly speaking, the circular sensing spots S1, S2, S3 act as a focusing lens on the coherent light propagating through the slab waveguide, resulting in a non-uniform illumination of the sensing spots located further downstream in the direction of the propagation of the coherent light. Also, in case additional rows of sensing spots are provided on the surface of the slab waveguide (typically parallel to the row in which the circular sensing spots S1, S2, S3 are arranged), crosstalk between sensing spots arranged in adjacent rows may occur which may result in unwanted noise and which may thus reduce the accuracy of the measurement and increase the detection limit (i.e. the minimum detectable mass of the target molecules). Thus, the wavefront distortion and the consequences resulting therefrom may lead to inaccuracies in the determination of the diffraction efficiency of the decoupler grating of the respective sensing spot.

It is therefore an object of the invention to overcome the afore-mentioned disadvantages.

In accordance with the present invention, these and other objects are met by a device for use in the detection of binding affinities and a system for the detection of binding affinities as they are specified by the features of the respective independent claim. Advantageous aspects of the device and system according to the invention are the subject of the respective dependent claims.

As used in the specification including the appended claims, the singular forms "a", "an", and "the" include the plural, unless the context explicitly dictates otherwise. When using the term "about" with reference to a particular numerical value or a range of values, this is to be understood in the sense that the particular numerical value referred to in connection with the "about" is included and explicitly disclosed, unless the context clearly dictates otherwise. For example, if a range of "about" numerical value A to "about" numerical value B is disclosed, this is to be understood to include and explicitly disclose a range of numerical value A to numerical value B. Also, whenever features are combined with the term "or", the term "or" is to be understood to also include "and" unless it is evident from the specification that the term "or" must be understood as being exclusive.

According to the invention, a device for use in the detection of binding affinities is suggested. The device comprises:
- a substrate,
- a slab waveguide arranged on the substrate and extending in a longitudinal direction, the slab waveguide comprising an outer surface opposite to a surface of the slab waveguide that faces the substrate, and
- an optical coupler arranged on the slab waveguide and configured to couple coherent light of a predetermined wavelength into the slab waveguide, such that the coherent light propagates in the longitudinal direction through the slab waveguide, with an evanescent field of the coherent light propagating along the outer surface of the slab waveguide.
The device further comprises at least one sensing spot arranged on the outer surface of the slab waveguide at a location spaced from the optical coupler by a distance in the longitudinal direction. The at least one sensing spot comprises affinity elements capable of binding with target molecules, wherein the affinity elements are arranged along a plurality of decoupler lines to form a decoupler grating when the target molecules are bound to the affinity elements. The decoupler grating is for decoupling from the slab waveguide a portion of the coherent light propagating through the slab waveguide.
The at least one sensing spot comprises a first straight boundary and a second straight boundary which are arranged parallel to one another and extend in the longitudinal direction, wherein each decoupler line of the plurality of decoupler lines extends from the first straight boundary to the second straight boundary.

The slab waveguide has a longitudinal direction, which is the (predetermined) propagation direction of the coherent light in the slab waveguide. The term 'slab waveguide' is meant to encompass entirely planar slab waveguides without any curvature, but also bent slab waveguides which may have a slight curvature.

An 'affinity element' denotes any kind of element or moiety of element that leads to either an attachment or to a predetermined minimum residence time of a particular target molecule or a group of target molecules on the said element. 'Binding' as understood herein encompasses non-covalent binding, such as through ionic bonds, van-der-Vaals bonds or hydrogen bonds, but may also encompass covalent binding, such as through covalent bonds.

The first and second straight boundaries of the sensing spot make sure the wavefront of the coherent light propagating through the slab waveguide and traversing the sensing spot is not getting distorted (or is only minimally distorted) when compared to the circular shape. It is even more advantageous in case the at least one sensing spot has a rectangular shape, as is discussed further below.

Sensing spots comprising the first and second straight boundaries are therefore also advantageous as they allow for being able to subtract from a measured intensity of the decoupled portion of the coherent light a static straylight contribution caused by a static speckle background. This possibility requires a wavefront having a shape that is constant over time, preferably a flat (non-distorted) wavefront of the coherent light propagating through the slab waveguide in order for the speckle pattern to be static. As described in the prior art, for example in WO 2020/015872 A1, for circular sensing spots a reference coherent light with a known phase relation with respect to the coherent light propagating in the slab waveguide can be used to interferometrically determine the phase information of the static speckle background. This phase information allows the subtraction of the static straylight contribution from the measured intensity of the decoupled portion of the coherent light. As the distortion of the wavefront scales with the refractive index of the biological material/target molecules on the sensing spot and hence with the amount of biological material/target molecules on the sensing spot, in the case of circular sensing spots the distortion of the wavefront changes significantly during a measurement so that the advantages of a subtraction of the contribution of a static speckle background by using a reference coherent light are severely compromised.

The distance between adjacently arranged decoupler lines of the sensing spot may decrease in the longitudinal direction to focus the decoupled portion of the coherent light in the longitudinal direction. The decoupler lines may also be curved to focus the decoupled portion of the coherent light in a transverse direction orthogonal to the longitudinal direction. Alternatively, the decoupler lines may be arranged such that the decoupler grating is non-focusing and the decoupled portion of the coherent light may be focused by a lens or a focusing mirror (external to the device). The intensity of the decoupled light may be detected at a detection location which is preferably a focal location of the decoupler grating or of the lens.

As already mentioned, in accordance with one aspect of the device according to the invention, the at least one sensing spot comprises a third straight boundary and a fourth straight boundary which extend in a transverse direction orthogonal to the longitudinal direction. The first straight boundary, the second straight boundary, the third straight boundary and the fourth straight boundary together form a rectangle, for example a square. Each decoupler line of the plurality of decoupler lines along which the affinity elements of the at least one sensing spot are arranged extends only within the said rectangle.

The four straight boundaries of the rectangular sensing spots make sure the wavefront of the coherent light propagating through the slab wave guide is not getting distorted (or is only minimally distorted) as the coherent light traverses the sensing spot. This is because each ray of the coherent light that traverses the sensing spot (i.e. the coherent light that is not decoupled by the decoupler grating of the sensing spot, this being the vast majority of the coherent light) has traversed a same amount of target molecules in the sensing spot. Therefore, the phase shift of the coherent light having traversed the sensing spot is uniform.

Illumination of the slab waveguide by the coherent light coupled into the slab waveguide is typically not uniform due to defects in the grating of the optical coupler or due to dust particles or other small defects in the slab waveguide resulting in the said non-uniform illumination (for example, such non-uniform illumination may consist of stripes). Devices having rectangular sensing spots are much less affected by such non-uniform illumination than devices having circular sensing spots. As mentioned above, this is because each ray of the coherent light that traverses the rectangular sensing has traversed a same amount of target molecules with a same refractive index in the rectangular sensing spot. Thus, the coherent light that has traversed a rectangular sensing spot further propagates through the slab waveguide with a flat wavefront and arrives at a subsequent sensing spot with an essentially flat wavefront, Obviously, this is not the case for a circular sensing spot.

In addition, the rectangular shape of the sensing spots ensures that the area where the slab waveguide must be processed to provide the plurality of decoupler lines comprising the affinity elements is limited to a predetermined rectangular area.

According to another aspect of the device according to the invention, the device further comprises at least one reference spot arranged on the outer surface of the slab waveguide at a location which is spaced from the optical coupler in the longitudinal direction by a distance and which is different from the location where the at least one sensing spot is arranged. The at least one reference spot comprises scattering elements to form a reference decoupler grating for decoupling from the slab waveguide a predetermined portion of the coherent light propagating through the slab waveguide.

Such a reference spot may be used in the determination of the intensity of the coherent light at a particular location of the slab waveguide. This may require the precise knowledge of the diffraction efficiency of the reference spot, as will be discussed further below. In a preferred embodiment a plurality of such reference spots is arranged along the longitudinal direction of the slab waveguide and may be used to determine a damping constant of the intensity along the longitudinal direction of the slab waveguide. The scattering elements of the reference spots may comprise nanoparticles, holes etched into the slab waveguide, or thin lithographically patterned inorganic layers deposited by techniques such atomic layer deposition and may be arranged such that they form a reference decoupler grating similar to the decoupler grating of a sensing spot.

The reference spot may serve as a reference for a refractometric sensing channel of the sensing spots. In the refractometric sensing channel, a change of a longitudinal location of a focus of the decoupler grating of the sensing spot is directly proportional to global refractive index changes on the outer surface of the slab waveguide. Changes in the global refractive index may occur when target molecules bind to the outer surface of the slab waveguide in a uniform manner. The difference in the respective longitudinal locations of the focus of the decoupler grating between the reference spot and the focus of the decoupler grating of the sensing spot is therefore representative for the difference in the bound mass of the sensing spot and the reference spot.

According to a further aspect of the device according to the invention, the at least one sensing spot comprises a plurality of sensing spots arranged on the outer surface of the slab waveguide. The individual sensing spots of the plurality of sensing spots are arranged in a rectangular matrix pattern that comprises a plurality of rows running in the longitudinal direction as well as a plurality of columns running in a transverse direction orthogonal to the longitudinal direction.

Generally, a plurality of sensing spots arranged on the outer surface of the slab waveguide allows to improve the statistics of the measurement when compared to just one single sensing spot. In addition, it is possible to arrange different types of affinity elements which are capable of binding different types of target molecules in the different sensing spots. Moreover, parameters the decoupler grating (such as the distance between the decoupler lines, curvature of the decoupler lines, etc.) may be varied in the different sensing spots.

An arrangement of the individual sensing spots of the plurality of sensing spots in the rectangular matrix pattern has the advantage that the sensing spots arranged in a same column are illuminated by coherent light having the same intensity.

Moreover, such an arrangement of the sensing spots is beneficial for the implementation of absorbers and separators to reduce straylight and cross-talk between sensing spots arranged in different rows of the matrix pattern. Preferably, the sensing spots are arranged such that they do not overlap in any direction.

According to a further aspect of the device according to the invention at least two sensing spots of the plurality of sensing spots, in particular all sensing spots of the plurality of the sensing spots, have the same size.

When sensing spots have the same size, the measured intensities of the coherent light decoupled by these sensing spots are comparable to each other.

According to another aspect of the device according to the invention, the at least one reference spot comprises at least two reference spots which are arranged in a same row of the plurality of rows of the rectangular matrix pattern.

In order to determine the diffraction efficiency of the decoupler grating of a sensing spot located at a particular location in the longitudinal direction (and thus the amount of target molecules bound to the affinity elements of this sensing spot) it may be beneficial to have knowledge of the intensity of the coherent light at different locations of the slab waveguide (in the longitudinal direction). The state of the art describes several ways to calculate the intensity of the coherent light propagating through the slab waveguide at the different locations of the sensing spots. Such calculation is either possible via a measurement of the intensity of the coherent light decoupled by an optical decoupler and by knowledge or determination of the damping constant of the slab waveguide, by knowledge of the scattering leakage of the slab waveguide and measuring the mean/median of the static speckle background, or by measuring the intensity of coherent light decoupled by a reference spot with a known equivalent coherent mass density which is located in close proximity either upstream or downstream to the sensing spot.

In one embodiment, a plurality of reference spots may be arranged along a row (e.g. the lowermost row) of the rectangular matrix pattern such that each column of the rectangular matrix pattern comprises one reference spot. This arrangement of the plurality of reference spots can be used to calculate a damping constant of the slab waveguide in the longitudinal direction based on the intensities of the coherent light decoupled by these reference spots, which in turn may be used in the determination of the intensity of the coherent light at the individual sensing spots.

In addition, another plurality of reference spots may be arranged in a column of the rectangular matrix pattern upstream of the plurality of sensing spots (with respect to the direction of propagation of the coherent light through the slab waveguide), such that in each row of the rectangular matrix pattern in which the sensing spots are arranged on the outer surface of the slab waveguide, one reference spot is arranged upstream of the plurality of sensing spots. A further plurality of reference spots may be arranged in a column of the rectangular matrix pattern downstream of the plurality of sensing spots (with respect to the direction of propagation of the coherent light through the slab waveguide), such that in each row of the rectangular matrix pattern in which the sensing spots are arranged on the outer surface of the slab waveguide, one reference spot is arranged downstream of the plurality of sensing spots. A ratio of the intensities of the light decoupled by the reference spots arranged in the same row (i.e. the reference spot arranged upstream of the sensing spots and the reference spot arranged downstream of the sensing spots) can then be used to determine changes in the damping constant of the slab waveguide for the said row, so that in case the damping constant changes in a respective row, a correction factor may be calculated for the location of each sensing spot in the said respective row.

The knowledge of the damping constant for the respective row - together with the knowledge of the intensity of the coherent light decoupled by a portion of a terminal decoupler arranged downstream of the rectangular matrix pattern and corresponding to the respective row - allow for a calculation of the intensity at the respective location of each of the sensing spots or reference spots arranged in the respective row of the rectangular matrix pattern. Thus, the measured intensities of the respective portions of the coherent light decoupled by each of the decoupler gratings of the sensing spots or reference spots allows to precisely quantify the respective diffraction efficiency of any of the sensing or reference spots.

Preferentially, the diffraction efficiency of the decoupler gratings of the reference spots arranged in a respective row in which also sensing spots are arranged is determined/calculated in a calibration measurement prior to the actual measurement of the intensities of the light decoupled by the decoupler gratings of the sensing spots (with the target molecules bound to the affinity elements). This calibration measurement may then serve as an intensity reference during the actual measurement for all the sensing spots arranged in the same row of the rectangular matrix pattern. In the calibration measurement, when no target molecules are bound to the affinity elements arranged along the decoupler lines of the sensing spots, the diffraction efficiency of the reference spots is determined using the intensity of the light decoupled by the terminal optical decoupler. During the actual measurement, the intensity of the light decoupled by the respective reference spot arranged upstream of the sensing spots in the same row can then be used - together with the diffraction efficiencies of the decoupler gratings of the reference spots - to calculate the intensity of the coherent light coupled into the slab waveguide, so that the intensity of the coherent light propagating through the slab waveguide at the respective locations of the individual sensing spots is known also during the measurement. This is advantageous over the determination of the intensity distribution of the light propagating through the slab waveguide by measuring the scattering leakage of each individual sensing spot, as described in the DE 10 2020 212 031A1.

According to still another aspect of the device according to the invention, the device further comprises a separator arranged between each adjacent two rows of the rectangular matrix pattern. The separator extends in the longitudinal direction to form separate wave-guiding channels.

Such a separator separates the slab waveguide into separate wave-guiding channels. The separate wave-guiding channels are arranged such that each of them extends along a respective row of the rectangular matrix pattern in which the sensing spots are arranged. Such a separation of the slab waveguide into separate wave-guiding channels is advantageous in that straylight between the sensing spots of adjacent rows of the rectangular matrix pattern is reduced. Each separator may be spaced by a distance in the transverse direction from the sensing spots arranged in the respective adjacent two rows of the rectangular matrix pattern. Preferably, said distance, for example at least 50 micrometers, is chosen such that effects resulting from the diffraction of coherent light at the separator do neither substantially distort the wavefront (and thus the phase) of the coherent light at the location of the sensing spots, nor the intensity of the coherent light at the location of the sensing spots.

In an alternative embodiment, the device comprises a such separator arranged between each outermost row of the rectangular matrix pattern and a respective lateral edge of the slab waveguide. This further separator extends in the longitudinal direction to form a further wave-guiding channel that is separated from the lateral edges of the slab waveguide. Such an arrangement of the separators reduces straylight from the lateral edges of the slab waveguide.

According to still another aspect of the device according to invention the separator comprises an interruption of the slab waveguide.

According to a further aspect of the device according to invention, the separator comprises an absorbent coating on the outer surface of the slab waveguide.

By way of example, interruption of the slab waveguide may be achieved by etching a groove into the substrate of the device having a depth in a range of several hundreds of nanometers into the substrate, for example by a dry reactive etching process, prior to waveguide deposition on the substrate. The etched groove may additionally serve for stress relief. Alternatively, the separation of the slab waveguide may be achieved by the absorbent coating on the outer surface of the slab waveguide which may comprise any suitable material which is absorbent at the wavelength of the coherent light propagating through the slab waveguide. The etched groove and the absorbent coating may also be combined to form the separator.

According to another aspect of the device according to the invention, the device comprises an absorber. The absorber is, viewed in the longitudinal direction, arranged between the optical coupler and the plurality of the sensing spots arranged in the rectangular matrix pattern, and, viewed in the transverse direction, arranged between adjacent two rows of the rectangular matrix pattern.

The absorbers form an aperture for the coherent light propagating through the slab waveguide. In an embodiment that comprises both, the absorber as well as the separator, the absorber is preferably arranged on top of the separator to further reduce the straylight. Each absorber may be spaced from the sensing spots arranged in the adjacent two rows of the rectangular matrix pattern by a distance in the transverse direction. Preferably, the distance, for example at least 50 micrometers, is chosen such that effects from diffraction at the absorbers of the coherent light propagating through the waveguide do neither substantially distort the wavefront (and thus the phase) of the coherent light at the location of the sensing spots, nor the intensity of the coherent light at the sensing spots.

According to one more aspect of the device according to the invention, the device further comprises a terminal optical decoupler for decoupling from the slab waveguide coherent light that has traversed the plurality of the sensing spots, the terminal optical decoupler being arranged relative to the plurality of sensing spots opposite to the optical coupler, when viewed in the longitudinal direction.

The terminal optical decoupler decouples the coherent light having traversed the plurality of the sensing spots to a large extent. Therefore, the terminal decoupler avoids that the coherent light that has traversed the plurality of the sensing spots is reflected back at one or more edges of the slab waveguide and propagates back to one or more of the sensing spots.

In addition, the intensity of the coherent light at the location of the terminal optical decoupler or even the transverse intensity distribution of the light decoupled by the terminal optical decoupler can be detected by an optical detector.

According to another aspect of the device according to the invention, the device comprises a further absorber. The further absorber is, when viewed in the longitudinal direction, arranged between the terminal optical decoupler and the plurality of the sensing spots arranged in the rectangular matrix pattern, and, viewed in the transverse direction, arranged between adjacent two rows of the rectangular matrix pattern.

Such further absorbers arranged upstream of the terminal optical decoupler (relative to the direction of propagation of the coherent light) and downstream of the sensing spots which are arranged in the matrix pattern creates regions at the terminal optical decoupler which are not impinged by the coherent light. This facilitates assigning the measured intensity distribution of the coherent light decoupled by the terminal decoupler to the associated rows of the matrix pattern in which the sensing spots are arranged.

A possible way to determine the intensity of the coherent light associated to each row of sensing spots is to integrate the intensities between two shadows in the intensity distribution caused by the absorbers and to correct for the ratio of the transverse extent of the sensing spots and the transverse spacing of the two shadows.

According to a further aspect of the device according to the invention, the device comprises a rectangular absorber, wherein the rectangular absorber comprises a first transverse segment and a second transverse segment, both extending in the transverse direction, as well as a first longitudinal segment and a second longitudinal segment. The first longitudinal segment and the second longitudinal segment extend in the longitudinal direction from the first transverse segment to the second transverse segment. The first transverse segment and the second transverse segment together with the first longitudinal segment and the second longitudinal segment form a closed rectangle. The closed rectangle encloses the plurality of the sensing spots arranged in the rectangular matrix pattern and at least the corresponding portions of the optical coupler and of the terminal optical decoupler.

The corresponding portions of the optical coupler and of the terminal optical decoupler are those portions of the optical coupler and of the terminal optical decoupler that overlap in transverse direction with the plurality of sensing spots arranged in the rectangular matrix pattern. Moreover, for embodiments comprising one or more reference spots, the said corresponding portions also comprise the corresponding portions of the optical coupler and of the terminal optical decoupler that overlap in transverse direction with the one or more reference spots. Thus, the rectangular absorber separates the portion of the optical coupler where the coherent light is coupled into the slab waveguide, the portion of the terminal optical decoupler where coherent light having traversed the plurality of the sensing spots is decoupled from the slab waveguide and the plurality of the sensing spots, from an outer region of the slab waveguide. This outer region comprises, among others, the edges of the slab waveguide. The rectangular absorber reduces straylight coming from the edges of the slab waveguide (e.g. straylight caused by reflection of the coherent light, or straylight that may inadvertently enter into the slab waveguide). In addition, the second transverse segment of the absorber arranged downstream of the terminal optical decoupler absorbs any undesired portions of the coherent light that are not decoupled by the terminal optical decoupler. Thereby, it is avoided that such undesired portions of the coherent light are reflected back by an edge of the slab waveguide.

Such a rectangular absorber, and also the separators and absorbers described above, can be combined with other measures for the reduction of straylight known from the prior art, such as optimization of the outer surface of the slab waveguide and the thickness and material of the slab waveguide.

According to a further aspect of the device according to the invention, the device further comprises a further plurality of sensing spots. The individual sensing spots of the further plurality of sensing spots are arranged in a further rectangular matrix pattern. The rectangular matrix pattern and the further rectangular matrix pattern are arranged with respect to each other such that a respective column of the rectangular matrix pattern and a respective column of the further rectangular matrix pattern are alternatingly arranged in the longitudinal direction. The individual sensing spots of the plurality of the sensing spots of the rectangular matrix pattern and the individual sensing spots of the further plurality of the sensing spots of the further rectangular matrix pattern are arranged in a zig-zag pattern when viewed in the longitudinal direction.

Such an alternating arrangement is advantageous in that cross-talk between detection locations of different sensing spots may be reduced.

According to the invention, there is also suggested a system for the detection of binding affinities. The system comprises a device according to invention and further comprises a light source for emitting coherent light of the predetermined wavelength. The device and the light source are arranged relative to each other to couple the coherent light emitted by the light source into the slab waveguide of the device. The system further comprises an optical detector arranged to measure at a detection location the intensity of a portion of the coherent light decoupled by the decoupler grating of the at least one sensing spot of the device.

The system according to the invention offers all advantages of the device according to the invention which are not repeated here.

Preferably an array optical detector with a resolution such that at least the intensity of the light decoupled by the terminal decoupled from different rows of sensing spots is separable should be used for the detection of the intensity.

Due to free space propagation of the coherent light decoupled by the terminal optical decoupler, the intensity distribution at the location of the array optical detector is different from the intensity at the location of the terminal decoupler (divergence). The effect of free space propagation can be reduced by imaging the surface of the terminal decoupler onto the array detector with the aid of a lens.

According to one aspect of the system according to invention, the device includes the at least one reference spot, and an optical reference detector arranged to measure at a reference detection location the intensity of a predetermined portion of the coherent light decoupled by the reference decoupler grating.

Measuring the intensity of a predetermined portion of the coherent light decoupled by the reference decoupler grating is advantageous in that this intensity is representative of the intensity of the coherent light propagating through the slab wave guide at the location of the reference spot. This intensity information may be used to determine the intensity at the location of a sensing spot arranged at a similar longitudinal location on the slab waveguide.

Further advantageous aspects of the invention become apparent from the following description of embodiments of the invention with the aid of the schematic drawings, in which:
- Fig. 1: shows a top view of a plurality of sensing spots arranged on a waveguide as described in the prior art;
- Fig. 2: shows a top view of a first embodiment of the device according to the invention;
- Fig. 3: shows a detailed view of the region III highlighted in Fig. 2, region III comprising two sensing spots;
- Fig. 4: shows a top view of a second embodiment of the device according to the invention;
- Figs. 5-7: show detailed views of the region V highlighted in Fig. 4, each showing a different embodiment of a separator running through region V;
- Fig. 8: shows a top view of a third embodiment of the device according to the invention comprising a rectangular absorber;
- Fig. 9: shows a top view of a fourth embodiment of the device according to the invention, comprising absorbers;
- Fig. 10: shows a top view of a fifth embodiment of the device according to the invention, comprising reference spots;
- Fig. 11: shows a top view of a sixth embodiment of the device according to the invention, comprising reference spots, separators and absorbers;
- Fig. 12: shows a top view of a seventh embodiment of the device according to the invention, comprising a plurality of fluidic channels;
- Fig. 13: shows a top view of an eighth embodiment of the device according to the invention, comprising one fluidic channel;
- Fig. 14: shows a top view of a ninth embodiment of the device according to the invention with an alternating arrangement of a plurality of sensing spots on the slab waveguide;
- Fig. 15: shows a top view of a tenth embodiment of the device according to the invention wherein the sensing spots have different dimensions, and
- Fig. 16: shows a perspective view of an embodiment of the system according to the invention.

**Fig. 2** shows a top view of a first embodiment of the device according to the invention. The device 1 comprises a slab waveguide 2 arranged on a substrate (not shown), which extends in a longitudinal direction L, as well as in a transverse direction which is T orthogonal to the longitudinal direction L. For example, the slab waveguide 2 may have a thickness in the range of 100 nanometers to 2000 nanometers and may be made of one of the materials SiNₓ, Ta₂O₅, Nb₂O₅, TiO₂ or SiONₓ. The device further comprises an optical coupler 4 comprising an optical grating with a plurality of straight optical grating lines extending in the transverse direction T, such that coherent light of a predetermined wavelength coupled into the slab waveguide 2 by the optical coupler 4 propagates in the longitudinal direction L. The optical coupler 4 is configured such that the coherent light coupled into the slab waveguide 2 propagates with a flat wavefront through the slab waveguide 2 in the longitudinal direction L (i.e. the coherent light has constant phase along the transverse direction orthogonal to the propagation direction). The optical coupler 4 may be covered by a transparent cover 40 made of a material having a lower refractive index than that of the slab waveguide, for example SiO₂ or SiONₓ.

Furthermore, the device 1 comprises a terminal optical decoupler 5. Like the optical coupler 4, the terminal optical decoupler 5 comprises an optical grating with a plurality of straight optical grating lines extending in the transverse direction T, such that coherent light propagating in the longitudinal direction through the slab waveguide 2 is decoupled from the slab waveguide 2. The terminal optical decoupler 5 may be covered by a transparent cover 50 made of a material having a lower refractive index than that of the slab waveguide 2, for example SiO₂ or SiONₓ.

The slab waveguide 2 comprises an outer surface 20 which is arranged opposite to a surface of the slab waveguide 2 facing the substrate (not shown). A plurality of sensing spots 3 is arranged on the outer surface 20 of the slab waveguide 2. The sensing spots 3 are arranged in a rectangular matrix pattern 25 comprising a plurality of rows R1-R7 and a plurality of columns C1-C9. Each of the rows R1-R7 runs in the longitudinal direction L, as indicated by the dashed lines for the rows R1, R2 and R7. Accordingly, each column runs in the transverse direction T, as indicated the dotted lines C1, C2 and C9.

Each of the sensing spots 3 has rectangular shape and is arranged at one of the matrix locations of the rectangular matrix pattern. Each of the sensing spots 3 has the same size. In an alternative embodiment, at least two of the sensing spots 3 may be of different size.

Fig. 3 shows a detailed view of the region labelled III in Fig. 2. Each of the sensing spots 3 comprises a plurality of decoupler lines 34. Affinity elements which are capable of binding with target molecules are arranged along the decoupler lines 34. By way of example, the decoupler lines may be curved according to the relevant equations disclosed in WO 2013107811 A1. In alternative embodiments, the decoupler lines may be straight.

Each of the sensing spots 3 has a rectangular shape. A first straight boundary 30 and a second straight boundary 31 are arranged parallel to one another and extend in the longitudinal direction L. Each decoupler line of the plurality of decoupler lines 34 extends from the first straight boundary 30 to the second straight boundary 31. Furthermore, the sensing spots 3 arranged on the outer surface 20 of the slab waveguide 2 comprise a third straight boundary 32 and a fourth straight boundary 33 which extend in the transverse direction T. The first straight boundary 30, the second straight boundary 31, the third straight boundary 32 and fourth straight boundary 33 form a closed rectangle, which may in particular be a square. Each decoupler line 34 along which the affinity elements are arranged extends only within said rectangle.

In addition, Fig. 3 shows two outer rays R of the coherent light which in operation propagates through the slab waveguide 2 and which traverse two rectangular sensing spots 3. In contrast to the circular sensing spots S1, S2, S3 shown in Fig. 1, where the coherent light propagating through the slab waveguide converges after having traversed the first sensing spot S1, the coherent light does not converge and does not get focused by traversing the first one of the sensing spots 3. Thus, the coherent light that has traversed the first one of the sensing spots 3 still has a flat wavefront when it arrives at the at the second one of the sensing spots 3.

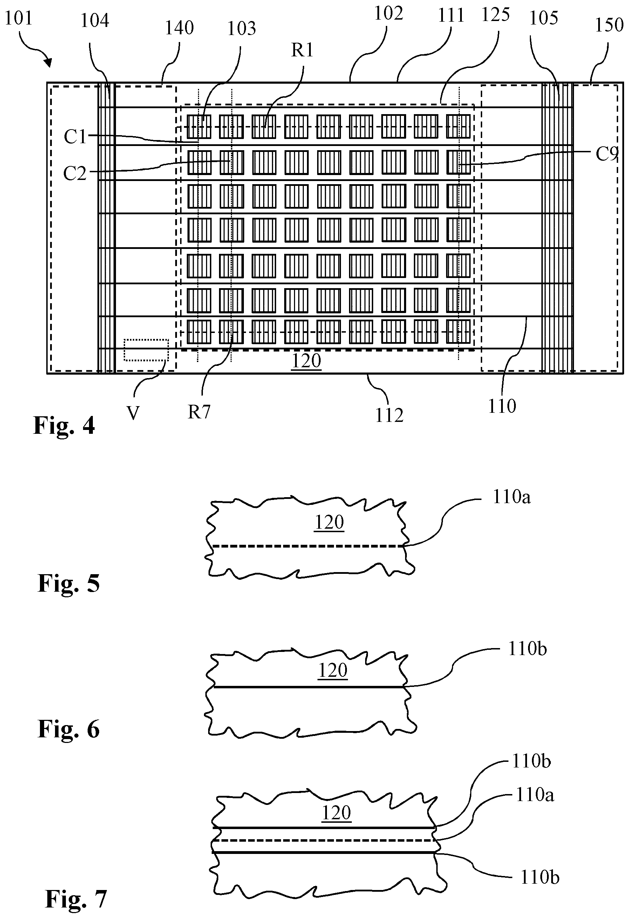

**Fig. 4** shows a top view of a second embodiment of the device according to the invention. The second embodiment is identical to the first embodiment shown in Fig. 2, except that the second embodiment additionally comprises a plurality of separators 110. Reference signs of corresponding features are increased by one hundred with respect to the first embodiment. A separator 110 is arranged between each adjacent rows R1-R7 of the rectangular matrix pattern 125 in which the sensing spots 103 are arranged on the outer surface 120 of the slab waveguide 102 (the matrix pattern further comprising the columns C1-C9, similar to Fig. 2). Each of the separators 110 extends in the longitudinal direction L to form separate wave-guiding channels. Moreover, in the second embodiment shown in Fig. 2, a separator 110 is also arranged between the respective outermost row R1, R7 of the rectangular matrix pattern 125 and the respective one of the two lateral edges 111, 112 of the slab waveguide 102. Each separator 110 extends in the longitudinal direction L from the optical coupler 104 to the terminal optical decoupler 105. The slab waveguide 102 may be interrupted along the separators 110 so as to form the separate wave-guiding channels. Like in the first embodiment of the device shown in Fig. 2, the optical coupler 104 of the second embodiment may be covered by a transparent cover 140 made of a material having a lower refractive index than that of the slab waveguide 102, for example SiO₂ or SiONₓ. The terminal optical decoupler 105 may be covered by a transparent cover 150 made of a material having a lower refractive index than that of the slab waveguide 102, for example SiO₂ or SiONₓ.

**Fig. 5** shows a detailed view of the region labelled V in Fig. 4, in which an embodiment of the separator 110 of Fig. 4 is shown in an enlarged view. The separator 110 shown in Fig. 4 is embodied in Fig. 5 as an interruption 110a of the slab waveguide, the outer surface 120 of which is shown in Fig. 5. The interruption 110a may be manufactured by etching a groove into the substrate prior to depositing the slab waveguide 102 on the substrate or alternatively etching a groove into the slab waveguide 102 after depositing the slab waveguide 102, thereby interrupting the waveguide.

**Fig. 6** shows a detailed view of the region labelled V in Fig. 4, in which another embodiment of the separator 110 of Fig. 4 is shown in an enlarged view. In this embodiment, the separator 110 shown in Fig. 4 is embodied as an absorbent coating 110b deposited on the outer surface 120 of the slab waveguide. The absorbent coating may comprise any material known to absorb at the coherent light of the predetermined wavelength propagating through the slab waveguide, for example a metal such as chromium, titanium, aluminum, silver or gold. In the present embodiment, the absorbent coating 110b is made of chromium black. By way of example, the coating may have a width in a range of 1 µm to 20 µm, in particular in a range of 10 µm to 20 µm.

**Fig. 7** shows a detailed view of the region labelled V in Fig. 4, in which yet another embodiment of the separator 110 of Fig. 4 is shown in an enlarged view. In this embodiment, the separator comprises the interruption 110a of the slab waveguide 102 shown in Fig. 5 in combination with the absorbent coating 110 b shown in Fig. 6. Thus, the separator comprises two stripes of the absorbent coating 110b which are arranged on the outer surface 120 of the slab waveguide symmetrically at both sides of the etched groove 110b.

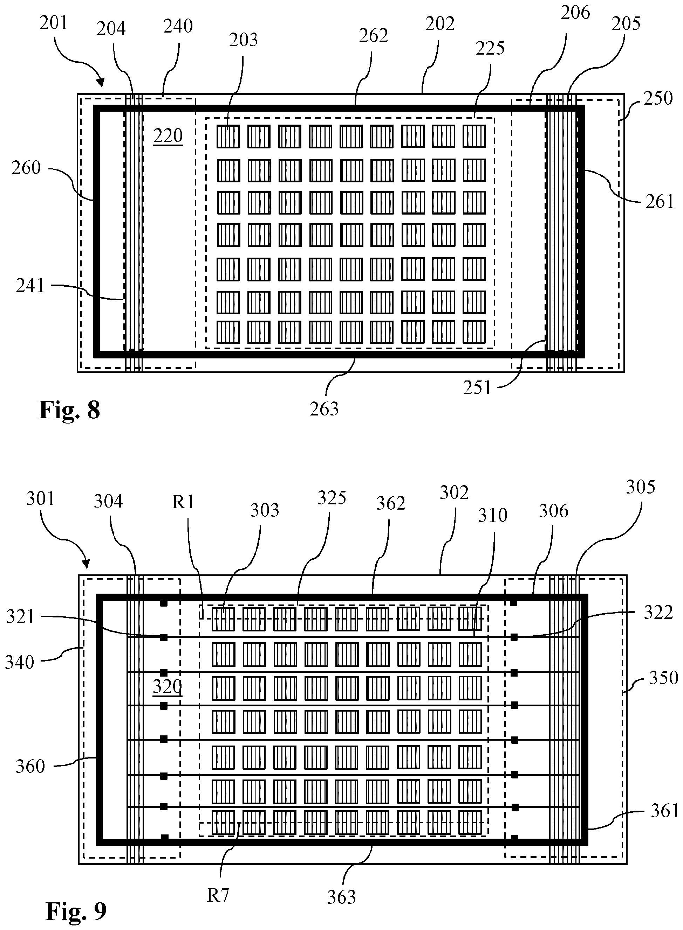

**Fig. 8** shows a top view of a third embodiment of the device according to the invention, which is identical to the first embodiment of the device, except that the device 201 further comprises a rectangular absorber 206. The rectangular absorber 206 comprises a first transverse segment 260 and a second transverse segment 261. The first transverse segment 260 is arranged between the optical coupler 204 and the (left) transverse edge of the slab waveguide 202. The second transverse segment is arranged between the terminal optical decoupler 205 and the (right) transverse edge of the slab waveguide 202. Moreover, the rectangular absorber 206 comprises a first longitudinal segment 262 and a second longitudinal segment 263, both extending in the longitudinal direction from the first transverse segment 260 to the second transverse segment 261, such that the first transverse segment 260, the second transverse segment 261, the first longitudinal segment 262 and the second longitudinal segment 263 form a closed rectangle. The two longitudinal segments 262, 263 are arranged on opposite sides of the plurality of sensing spots 203 arranged in the rectangular matrix pattern 225. Thus, the rectangular absorber 206 encloses the plurality of sensing spots 203, a corresponding portion 241 of the optical coupler 204 and a corresponding portion 251 of the terminal optical decoupler 205. The corresponding portions 241, 251 are the respective portions of the optical coupler 204 and the terminal optical decoupler 205 which overlap with the plurality of sensing spots 203 arranged on the surface 220 of the slab waveguide 202 in the rectangular matrix pattern 225, when viewed in the transversal direction T. Thus, all parts of the device that are actually relevant for the measurement are protected by the rectangular absorber 206 against straylight that may enter the slab waveguide 202 via the edges of the slab waveguide 202, as well as against any reflected portions of the coherent light of the predetermined wavelength. Moreover, the second transverse segment 261 acts as a beam dump for portions of the coherent light which are neither decoupled by one of the sensing spots 203 nor decoupled by the terminal optical decoupler 205.

Like in the first embodiment of the device shown in Fig. 2, the optical coupler 204 of the second embodiment may be covered by a transparent cover 240 made of a material having a lower refractive index than that of the slab waveguide 202, for example SiO₂ or SiONₓ. The terminal optical decoupler 205 may be covered by a transparent cover 250 made of a material having a lower refractive index than that of the slab waveguide 202, for example SiO₂ or SiONₓ.

**Fig. 9** shows a top view of a fourth embodiment of the device 301 according to the invention, which comprises all features of the third embodiment shown in Fig. 8, whereas reference signs of corresponding features are increased by one hundred with respect to the third embodiment shown in Fig. 8. In addition, the fourth embodiment comprises a plurality of separators 310, as well as a plurality of absorbers 321, and a plurality of further absorbers 322.

Each of the absorbers 321 is arranged between the optical coupler 304 and the plurality of sensing spots 303 arranged along the rectangular matrix pattern 325, when viewed in the longitudinal direction. Each of the further absorbers 322 is arranged between the plurality of sensing spots 303 and the terminal optical decoupler 305, when viewed in the longitudinal direction. Like in the first embodiment of the device shown in Fig. 2 and in the second embodiment of the device shown in Fig. 8, the optical coupler 304 of the second embodiment may be covered by a transparent cover 340 made of a material having a lower refractive index than that of the slab waveguide 302, for example SiO₂ or SiONₓ. The terminal optical decoupler 305 may be covered by a transparent cover 350 made of a material having a lower refractive index than that of the slab waveguide 302, for example SiO₂ or SiONₓ.

When viewed in the transverse direction, an absorber 321 is arranged between each two adjacent rows of sensing spots 303 of the rectangular matrix pattern 325 arranged on the outer surface 320 of the slab waveguide 302. Moreover, two of the absorbers 321 are arranged on opposite sides of the rectangular matrix pattern 325, adjacent to each of the two outermost rows R1, R7 of the rectangular matrix pattern 325. Each pair of adjacently arranged absorbers 321 creates an aperture for the coherent light propagating through the slab waveguide 302 and therefore reduces straylight.

When viewed in the transverse direction, a further absorber 322 is arranged between each two adjacent rows of the sensing spots 303 of the rectangular matrix pattern 325 arranged on the outer surface 320 of the slab waveguide 302. Moreover, two respective absorbers 322 are arranged on opposite sides of the rectangular matrix pattern 325. The further absorbers 322 create regions at the terminal optical decoupler 305 which are not impinged by the coherent light to facilitate assigning the measured intensity distribution to the respective row of the matrix pattern in which the sensing spots 303 are arranged.

All absorbers 321 and all further absorbers 322 are arranged within the rectangular absorber 306 comprising the first transverse segment 360 and the second transverse segment 361 as well as the first longitudinal segment 362 and the second longitudinal segment 363.

Each of the absorbers 321 may comprise a rectangularly shaped absorbent coating made of chromium black and deposited on the outer surface 320 of slab waveguide 2. The absorbers 321 and the absorbers 322 may each have an extent in the transversal direction T of 100-300 micrometers and an extent in the longitudinal direction L of 20 - 50 micrometers.

In the fourth embodiment of the device 301, each absorber 321 and each of further absorber 322 is arranged on top of one of the separators 310. In alternative embodiments, the device may comprise only the plurality of absorbers 321 or only the plurality of further absorbers 322, but does not comprise the separators 310.

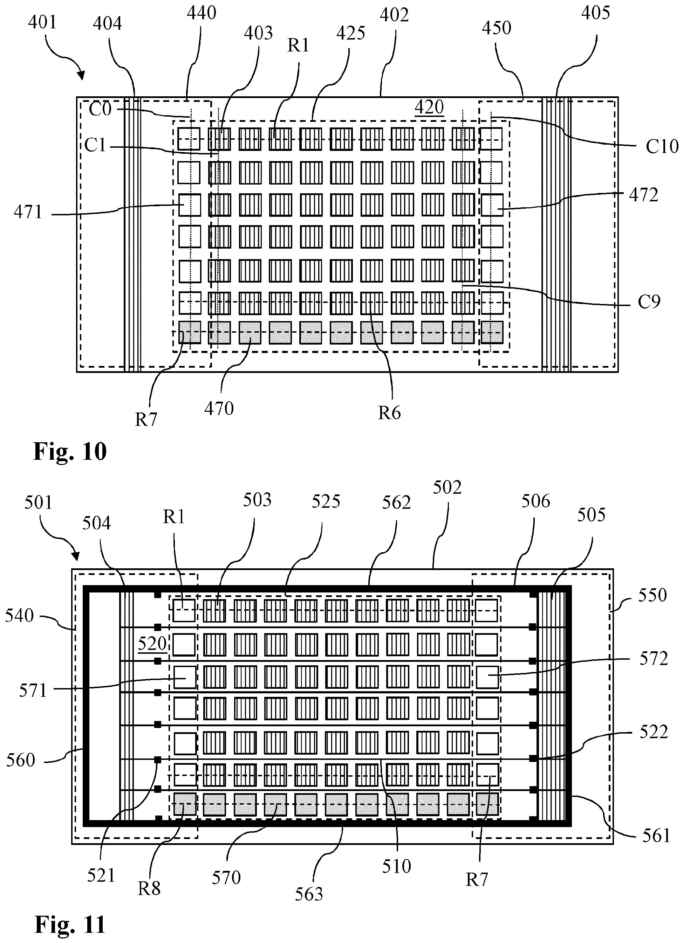

**Fig. 10** shows a top view of a fifth embodiment of the device 401 according to the invention, which comprises all features of the first embodiment shown in Fig. 2, whereas reference signs of corresponding features are increased by one hundred with respect to the fourth embodiment shown in Fig. 9. In addition to the features of the first embodiment shown in Fig.2, the fourth embodiment of the device 401 comprises preferably rectangular, in particular square, reference spots 470, 471, 472. Like in the previous embodiments, the fifth embodiment comprises and optical coupler 404 as well as a terminal optical decoupler 405.

Each of the reference spots 470, 471, 472 comprises scattering elements to form a reference decoupler grating for decoupling from the slab waveguide 402 a predetermined portion of the coherent light propagating through the slab waveguide 402. The scattering elements may comprise holes etched into the slab waveguide. In an alternative embodiment, the scattering elements may comprise nanoparticles. In another alternative embodiment, the scattering elements may comprise thin lithographically patterned inorganic layers deposited by techniques such atomic layer deposition. The total coherent mass density of the reference spots is preferentially equivalent to between 10-20 picograms per square millimeter in order to be sufficiently bright to be measured with sufficient precision.

The reference spots 470 are arranged along the lowermost row R7 of the rectangular matrix pattern 425, such that each column C0-C10 of the rectangular matrix pattern 425 comprises one reference spot 470. This arrangement of the plurality of reference spots 470 can be used to compute the damping constant.

The reference spots 471 are arranged in a column C0 of the rectangular matrix pattern 425, upstream of the plurality of sensing spots 403 (with respect to the direction of propagation of the coherent light through the slab waveguide 402), such that in each row R1-R6 of the rectangular matrix pattern 425 in which the sensing spots 403 are arranged on the outer surface 420 of the slab waveguide 402, one reference spot 471 is arranged upstream of the plurality of sensing spots 403. A further plurality of reference spots 472 is arranged in a column C10 of the rectangular matrix pattern 425 downstream of the plurality of sensing spots 403 (with respect to the direction of propagation of the coherent light through the slab waveguide 402), such that in each row R1-R6 of the rectangular matrix pattern 425 in which the sensing spots 403 are arranged on the outer surface 420 of the slab waveguide 402, one reference spot 472 is arranged downstream of the plurality of sensing spots 403.

A ratio of the intensities of the light decoupled by the reference spot 471 and the reference spot 472 arranged in the same row can then be used to determine changes in a damping constant of slab waveguide 402 for the said row, so that in case the damping constant changes in a respective row, a correction factor may be computed for the location of each sensing spot 403 in the said respective row. The reference spots 471 and the reference spots 472 are covered by respective transparent covers 440, 450 which also cover the optical coupler 404 and the terminal optical decoupler 405, respectively.

**Fig. 11** shows a top view of a sixth embodiment of the device 501 according to the invention, which comprises all features of the fourth embodiment shown in Fig. 10, whereas reference signs of corresponding features are increased by one hundred with respect to the fifth embodiment shown in Fig. 10. Like in the previous embodiments, the sixth embodiment of the device comprises an optical coupler 504 as well as an terminal optical decoupler 505.

In addition, the device 501 comprises the plurality of separators 510. One of the separators 510 is arranged between row R6 of the rectangular matrix pattern 525, in which sensing spots 503 as well as reference spots 571 and 572 are arranged on the outer surface 520 of the slab waveguide 502, and row R7 of rectangular matrix pattern 525 in which only reference spots 570 are arranged on the outer surface 520 of the slab waveguide 502, such that a wave-guiding channel is also formed for the row R7 in which only the reference spots 570 are arranged. Thus, the stray light is reduced for the row R7 in which only the reference spots 570 are arranged, similar to the rows R1-R6 in which reference spots 571 and 572 as well as the sensing spots 503 are arranged on the outer surface 520 of the slab waveguide 502. Moreover, the device 501 comprises the rectangular absorber 506 comprising the first transverse segment 560 and the second transverse segment 561 as well as the first longitudinal segment 562 and the second longitudinal segment 563.

A plurality of absorbers 521 is arranged upstream of the rectangular matrix pattern 525 along the rows and columns of which the sensing spots 503 and the reference spots 570, 571, 572 are arranged. The absorbers 521 are arranged on top of the separators 510. In addition to that, a plurality of further absorbers 522 is arranged downstream of the rectangular matrix pattern 525 along the rows and columns of which with the sensing spots 503 and the reference spots 570, 571, 572 are arranged. Again, the further absorbers are arranged on top of each one of the separators 510. The reference spots 571 and the reference spots 572 are covered by respective transparent covers 540, 550 which also cover the optical coupler 504 and the terminal optical decoupler 505, respectively.

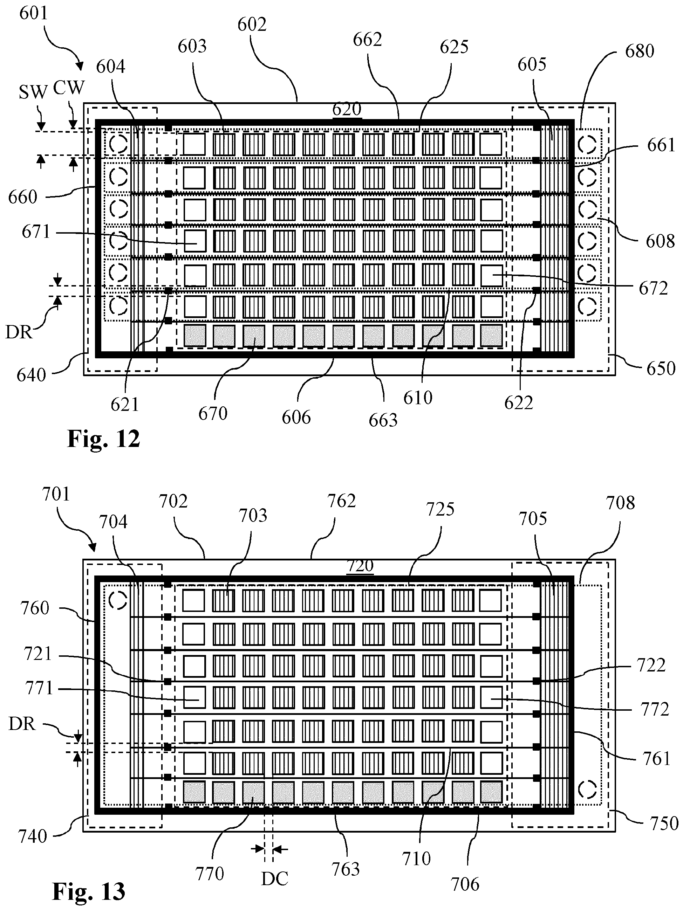

**Fig. 12** shows a top view of a seventh embodiment of the device 601 according to the invention, which comprises all features of the fifth embodiment shown in Fig. 10, whereas reference signs of corresponding features are increased by one hundred with respect to the sixth embodiment shown in Fig. 11.

Each of the reference spots 670, 671, 672 comprises scattering elements to form a reference decoupler grating for decoupling from the slab waveguide 602 a predetermined portion of the coherent light propagating through the slab waveguide 602. The scattering elements may comprise holes etched into the slab waveguide. In an alternative embodiment, the scattering elements may comprise nanoparticles. In another alternative embodiment, the scattering elements comprise thin lithographically patterned inorganic layers deposited by techniques such atomic layer deposition.

The reference spots 670 are arranged along the lowermost row R7 (see Fig. 10) of the rectangular matrix pattern 625, such that each column C0-C10 (see also Fig. 10) of the rectangular matrix pattern 625 comprises one reference spot 670. This arrangement of the plurality of reference spots 670 can be used to compute the damping constant, as has been described above with reference to Fig. 10.

The reference spots 671 are arranged in the column C0 (see Fig. 10) of the rectangular matrix pattern 625, upstream of the plurality of sensing spots 603 (with respect to the direction of propagation of the coherent light through the slab waveguide 602), such that in each row R1-R6 (see Fig. 10) of the rectangular matrix pattern 625 in which the sensing spots 603 are arranged on the outer surface 620 of the slab waveguide 602, one reference spot 671 is arranged upstream of the plurality of sensing spots 603. A further plurality of reference spots 672 is arranged in a column C10 (see Fig. 10) of the rectangular matrix pattern 625 downstream of the plurality of sensing spots 603 (with respect to the direction of propagation of the coherent light through the slab waveguide 602), such that in each row R1-R6 of the rectangular matrix pattern 625 in which the sensing spots 603 are arranged on the outer surface 620 of the slab waveguide 602, one reference spot 672 is arranged downstream of the plurality of sensing spots 603.

In addition, the device 601 comprises the plurality of separators 610. One of the separators 610 is arranged between row R6 of the rectangular matrix pattern 625, in which sensing spots 603 as well as reference spots 671 and 672 are arranged on the outer surface 620 of the slab waveguide 602, and row R7 of rectangular matrix pattern 625 in which only reference spots 670 are arranged on the outer surface 620 of the slab waveguide 602, such that a wave-guiding channel is also formed for the row R7 in which only the reference spots 670 are arranged. Thus, the stray light is reduced for the row R7 in which only the reference spots 670 are arranged, similar to the rows R1-R6 in which reference spots 671 and 672 as well as the sensing spots 603 are arranged on the outer surface 620 of the slab waveguide 602. Moreover, the device 601 comprises the rectangular absorber 606 comprising the first transverse segment 660 and the second transverse segment 661 as well as the first longitudinal segment 662 and the second longitudinal segment 663.

A plurality of absorbers 621 is arranged upstream of the rectangular matrix pattern 625 along the rows and columns of which the sensing spots 603 and the reference spots 670, 671, 672 are arranged. The absorbers 621 are arranged on top of the separators 610. In addition to that, a plurality of further absorbers 622 is arranged downstream of the rectangular matrix pattern 625 along the rows and columns of which with the sensing spots 603 and the reference spots 670, 671, 672 are arranged. The optical coupler 604 and the terminal optical coupler 605 are covered by respective transparent covers 640, 650.

In addition, the device 601 comprises a plurality of fluidic channels 608 mounted to the outer surface 620 of the slab waveguide 602. Each of the fluidic channels 608 covers one of the rows R1-R6 (see Fig. 10) of the rectangular matrix pattern in which the sensing spots 603 as well as the reference spots 671, 672 are arranged. The width CW of the fluidic channel 608 is larger than a width SW of the sensing spots 603 in the transverse direction, for example by 0.1 mm or more, preferably 200-250 µm (micrometers), due to the thickness of fluidic channel walls 680. For example, for square sensing spots with a side length of 0.4 mm (millimetres), a preferred distance DR between the sensing spots 603 of adjacent rows of the rectangular matrix pattern 625 in transverse direction (i.e. in the direction of the columns) may be 0.75 mm.

**Fig. 13** shows a top view of an eighth embodiment of the device 701 according to the invention. Reference signs of corresponding features are increased by one hundred with respect to the seventh embodiment shown in Fig. 12. The embodiment is identical to the one shown in Fig. 12, with the only difference that the entire rectangular matrix pattern comprising the sensing spots 703 is covered by one common fluidic channel 708. In this eighth embodiment, it is preferred that the distance DR between the sensing spots 703 of adjacent rows of the rectangular matrix pattern 725 and the distance DC between adjacent the sensing spots 703 (or reference spots 770) of adjacent columns of the rectangular matrix pattern 725 is equal and preferably chosen to be matched to available spotting systems. As spotting systems require some tolerances in the range of 20-30 micrometers and typically their spots are round, in the case of square sensing spots the minimal sensing spot size should be at least 1.41 times the side length of the square. Thus, for example, for sensing spots of 0.4 millimeters side length the spacing may at least be 0.565 millimeters or more, for example 0.69 millimeters.

Each of the reference spots 770, 771, 772 comprises scattering elements to form a reference decoupler grating for decoupling from the slab waveguide 702 a predetermined portion of the coherent light propagating through the slab waveguide 702.

The reference spots 770 are arranged along the lowermost row R7 (see Fig. 10) of the rectangular matrix pattern 725, such that each column C0-C10 (see also Fig. 10) of the rectangular matrix pattern 725 comprises one reference spot 770. This arrangement of the plurality of reference spots 770 can be used to compute the damping constant, as has been described above with reference to Fig. 10.

The reference spots 771 are arranged in the column C0 (see Fig. 10) of the rectangular matrix pattern 725, upstream of the plurality of sensing spots 703 (with respect to the direction of propagation of the coherent light through the slab waveguide 702), such that in each row R1-R6 (see Fig. 10) of the rectangular matrix pattern 725 in which the sensing spots 703 are arranged on the outer surface 720 of the slab waveguide 702, one reference spot 771 is arranged upstream of the plurality of sensing spots 703. A further plurality of reference spots 772 is arranged in a column C10 (see Fig. 10) of the rectangular matrix pattern 725 downstream of the plurality of sensing spots 703 (with respect to the direction of propagation of the coherent light through the slab waveguide 702), such that in each row R1-R6 of the rectangular matrix pattern 725 in which the sensing spots 703 are arranged on the outer surface 720 of the slab waveguide 702, one reference spot 772 is arranged downstream of the plurality of sensing spots 703.

In addition, the device 701 comprises the plurality of separators 710. One of the separators 710 is arranged between row R6 of the rectangular matrix pattern 725, in which sensing spots 703 as well as reference spots 771 and 772 are arranged on the outer surface 720 of the slab waveguide 702, and row R7 of rectangular matrix pattern 725 in which only reference spots 770 are arranged on the outer surface 720 of the slab waveguide 702, such that a wave-guiding channel is also formed for the row R7 in which only the reference spots 770 are arranged. Thus, the stray light is reduced for the row R7 in which only the reference spots 770 are arranged, similar to the rows R1-R6 in which reference spots 771 and 772 as well as the sensing spots 703 are arranged on the outer surface 720 of the slab waveguide 702. Moreover, the device 701 comprises the rectangular absorber 706 comprising the first transverse segment 760 and the second transverse segment 761 as well as the first longitudinal segment 762 and the second longitudinal segment 763.

A plurality of absorbers 721 is arranged upstream of the rectangular matrix pattern 725 along the rows and columns of which the sensing spots 703 and the reference spots 770, 771, 772 are arranged. The absorbers 721 are arranged on top of the separators 710. In addition to that, a plurality of further absorbers 722 is arranged downstream of the rectangular matrix pattern 725 along the rows and columns of which with the sensing spots 703 and the reference spots 770, 771, 772 are arranged. The optical coupler 704 and the terminal optical coupler 705 are covered by respective transparent covers 740, 750.

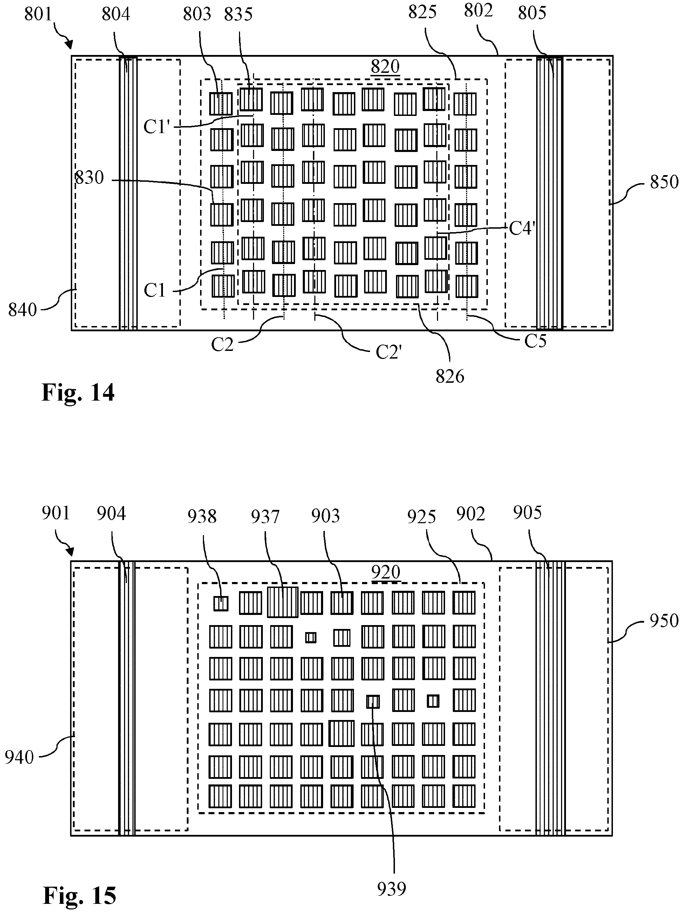

**Fig. 14** shows a top view of a ninth embodiment of the device 801 according to the invention. Reference signs of corresponding features are increased by one hundred with respect to the eighth embodiment shown in Fig. 13.

The device 801 comprises a slab waveguide 802 arranged on a substrate (not shown). The device further comprises an optical coupler 804 comprising an optical grating with a plurality of straight optical grating lines extending in the transverse direction, such that coherent light of a predetermined wavelength coupled into the slab waveguide 802 by the optical coupler 804 propagates in the longitudinal direction. The optical coupler 804 may be covered by a transparent cover 840 made of a material having a lower refractive index than that of the slab waveguide, for example SiO₂ or SiONₓ.

Furthermore, the device 801 comprises a terminal optical decoupler 805. The terminal optical decoupler 5 may be covered by a transparent cover 850 made of a material having a lower refractive index than that of the slab waveguide 802, for example SiO₂ or SiONₓ.

The slab waveguide 802 comprises an outer surface 820 which is arranged opposite to a surface of the slab waveguide 802 facing the substrate (not shown). A plurality of sensing spots 803 is arranged on the outer surface 820 of the slab waveguide 2. The sensing spots 803 are arranged in a rectangular matrix pattern 825 comprising a plurality of rows (not labelled in Fig. 14) and a plurality of columns C1-C5.

In addition, the device comprises a further plurality of sensing spots 835. The further plurality of sensing spots 835 is arranged in a further rectangular matrix pattern 826. The further rectangular matrix pattern 826 and the rectangular matrix pattern 825 are arranged with respect to each other such that a respective column C1-C5 (only dotted vertical lines C1, C2 and C5 shown in Fig. 14) of the rectangular matrix pattern 825 and a respective column C1'-C4' (only dashed-and-dotted vertical lines C1', C2' and C4') of the further rectangular matrix pattern 826 are alternatingly arranged in the longitudinal direction such that the individual sensing spots 803 of the rectangular matrix pattern 825 and the individual sensing spots 835 of the further rectangular matrix pattern 826 are arranged in a zig-zag pattern when viewed in the longitudinal direction.

**Fig. 15** shows a top view of a tenth embodiment of the device 901 according to the invention. Reference signs of corresponding features are increased by one hundred with respect to the ninth embodiment shown in Fig. 14.

The device 901 comprises a slab waveguide 902 arranged on a substrate (not shown). The device further comprises an optical coupler 904 comprising an optical grating with a plurality of straight optical grating lines extending in the transverse direction, such that coherent light of a predetermined wavelength coupled into the slab waveguide 902 by the optical coupler 904 propagates in the longitudinal direction. The optical coupler 904 may be covered by a transparent cover 940 made of a material having a lower refractive index than that of the slab waveguide, for example SiO₂ or SiONₓ.

Furthermore, the device 901 comprises a terminal optical decoupler 905. The terminal optical decoupler 905 may be covered by a transparent cover 950 made of a material having a lower refractive index than that of the slab waveguide 902, for example SiO₂ or SiONₓ.

The slab waveguide 902 comprises an outer surface 920 which is arranged opposite to a surface of the slab waveguide 902 facing the substrate (not shown). A plurality of sensing spots 903, 937, 938, 939 is arranged along the rows and columns of the rectangular matrix pattern 925. However, in this embodiment the individual sensing spots 903, 937, 938, 939 have different sizes. As the detection limit (i.e. the lowest amount of the target molecules that can still be detected) is inversely proportional to the area of the sensing spot, each of the sensing spots 903, 937, 938, 939 has a different detection limit. By way of example, the sensing spot 937 has a larger area than the sensing spot 938 and thus, the sensing spot 937 has a lower detection limit than the sensing spot 938. As each of the sensing spots 903 937, 938, 939 can be functionalized to capture different types of target molecules, the detection limit can be tuned to the expected concentration of the respective type of target molecules, so that the available area of the sensing spot can be more efficiently used. In an alternative embodiment, sensing spots of a smaller size may be arranged in the same row of the rectangular matrix pattern for target molecules of higher concentrations, which allows to arrange sensing spots of a larger size in other rows of the rectangular matrix pattern to be able to detect target molecules of lower concentrations.

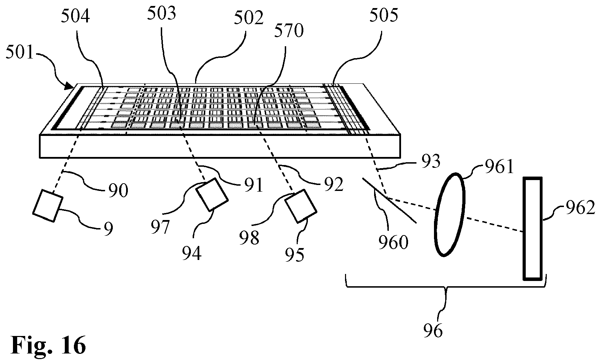

**Fig. 16** shows an embodiment of a system for the detection of binding efficiencies. In this embodiment of the system, the system comprises the device 501 of the sixth embodiment (see Fig. 11). In addition, the system comprises a light source 9 for emitting coherent light 90 of a predetermined wavelength. The coherent light 90 is coupled into the slab waveguide 502 by means of the optical coupler 504.

A detector 94 is arranged at a detection location 97 to measure the intensity of the portion of the coherent light 91 decoupled by the decoupler grating of the sensing spot 503 from the coherent light propagating through the slab waveguide 502. In the embodiment shown, the decoupler grating of the sensing spot 503 is configured to focus the decoupled portion of the coherent light 91 to the detection location 97 where the detector 94 is arranged.

In addition, the system comprises a reference detector 95 which is arranged at a reference detection location 98 to measure the intensity of a further portion of the coherent light 92 decoupled from by the reference decoupler grating of the reference spot 570. In the embodiment shown, the reference decoupler grating of the reference spot 570 is configured to focus the further portion of the coherent light 92 to the detection location 97 where the reference detector 95 is arranged.

Moreover, the system comprises an optical detection system 96 for measuring the intensity of the light decoupled by the terminal optical decoupler 505. To reduce the effect of the free space propagation of the coherent light 93 decoupled by the terminal optical decoupler 505, which manifest in a divergence of the decoupled coherent light, the optical detection 96 system may comprise a lens 961 to image a surface of the terminal optical decoupler 505 to a further detector 962. In alternative embodiment, an optical imaging system is used to compensate for the tilted image plane relative to the propagation direction of the decoupled light.

## Claims

1. Device (1, 101, 201, 301, 401, 501, 601, 701, 801, 901) for use in the detection of binding affinities, comprising:
- a substrate,
- a slab waveguide (2, 102, 202, 302, 402, 502, 602, 702, 802, 902) arranged on the substrate and extending in a longitudinal direction, the slab waveguide comprising an outer surface (20, 120, 220, 320, 420, 520, 620, 720, 820, 920) opposite to a surface of the slab waveguide that faces the substrate,
- an optical coupler (4, 104, 204, 304, 404, 504, 604, 704, 804, 904) arranged on the slab waveguide and configured to couple coherent light of a predetermined wavelength into the slab waveguide, such that the coherent light propagates in the longitudinal direction through the slab waveguide, with an evanescent field of the coherent light propagating along the outer surface of the slab waveguide, and
- at least one sensing spot (3, 103, 203, 303, 403, 503, 603, 703, 803, 835, 903, 937, 938) arranged on the outer surface of the slab waveguide at a location spaced from the optical coupler by a distance in the longitudinal direction, the at least one sensing spot comprising affinity elements capable of binding with target molecules, wherein the affinity elements are arranged along a plurality of decoupler lines (34) to form a decoupler grating when the target molecules are bound to the affinity elements, the decoupler grating for decoupling from the slab waveguide a portion of the coherent light propagating through the slab waveguide,
**characterized in that**
the at least one sensing spot comprises a first straight boundary (30) and a second straight boundary (31) which are arranged parallel to one another and extend in the longitudinal direction, and wherein each decoupler line of the plurality of decoupler lines (34) extends from the first straight boundary (30) to the second straight boundary (31).

2. Device according to claim 1, wherein the at least one sensing spot comprises a third straight boundary (32) and a fourth straight boundary (33) which extend in a transverse direction orthogonal to the longitudinal direction, wherein the first straight boundary (30), the second straight boundary (31), the third straight boundary (32) and the fourth straight boundary (33) together form a rectangle, for example a square, and wherein each decoupler line of the plurality of decoupler lines (34) along which the affinity elements of the at least one sensing spot are arranged extends only within the said rectangle.

3. Device according to claim 1 or claim 2, further comprising at least one reference spot (470, 471, 472, 570, 571, 572, 670, 671, 672, 770, 771, 772) arranged on the outer surface (420, 520, 620, 720) of the slab waveguide (402, 502, 602, 702) at a location which is spaced from the optical coupler (404, 504, 604, 704) in the longitudinal direction by a distance and which is different from the location where the at least one sensing spot (403, 503, 603, 703) is arranged, the at least one reference spot comprising scattering elements to form a reference decoupler grating for decoupling from the slab waveguide a predetermined portion of the coherent light propagating through the slab waveguide.

4. Device according to any one of the preceding claims, wherein the at least one sensing spot comprises a plurality of sensing spots (3, 103, 203, 303, 403, 503, 603, 703, 803, 835, 903, 937, 938) arranged on the outer surface (20, 120, 220, 320, 420, 520, 620, 720, 820, 920) of the slab waveguide (2, 102, 202, 302, 402, 502, 602, 702, 802, 902), wherein the individual sensing spots of the plurality of sensing spots are arranged in a rectangular matrix pattern (25, 125, 225, 325, 425, 625, 725, 825, 925) that comprises a plurality of rows (R1-R7, R1-R8) running in the longitudinal direction as well as a plurality of columns (C1-C9, C0-C10) running in a transverse direction orthogonal to the longitudinal direction.

5. Device according to claim 4, wherein at least two sensing spots of the plurality of sensing spots, in particular all sensing spots of the plurality of the sensing spots, have the same size.

6. Device according to claim 3 and any one of claims 4 and 5, wherein the at least one reference spot comprises at least two reference spots (470, 471, 472, 570, 571, 572, 670, 671, 672, 770, 771, 772) which are arranged in a same row of the plurality of rows of the rectangular matrix pattern (425, 525, 625, 725).

7. Device according to any one of claims 4 to 6, further comprising a separator (110, 310, 510, 610, 710) arranged between each adjacent two rows of the rectangular matrix pattern, wherein the separator extends in the longitudinal direction to form separate wave-guiding channels.

8. Device according to claim 7, wherein the separator (110) comprises an interruption (110b) of the slab waveguide (102).

9. Device according to claim 7 or claim 8, wherein the separator (110) comprises an absorbent coating (110b) on the outer surface (120) of the slab waveguide (102).

10. Device according to any one of claims 4 to 9, wherein the device further comprises an absorber (321, 521, 621, 721) which, viewed in the longitudinal direction, is arranged between the optical coupler (304, 504, 604, 704) and the plurality of the sensing spots (303, 503, 603, 703) arranged in the rectangular matrix pattern (325, 525, 625, 725), and which, viewed in the transverse direction, is arranged between adjacent two rows of the rectangular matrix pattern (325, 525, 625, 725).

11. Device according to any one of claims 4 to 10 wherein the device further comprises a terminal optical decoupler (5, 105, 205, 305, 405, 505, 605, 705, 805, 905) for decoupling from the slab waveguide (2, 102, 202, 302, 402, 502, 602, 702, 802, 902) coherent light that has traversed the plurality of the sensing spots, the terminal optical decoupler being arranged relative to the plurality of sensing spots opposite to the optical coupler (4, 104, 204, 304, 404, 504, 604, 704, 804, 904), when viewed in the longitudinal direction.

12. Device according to claim 11, wherein the device comprises a further absorber (322, 522, 622, 722) which, when viewed in the longitudinal direction, is arranged between the terminal optical decoupler (305, 505, 605, 705) and the plurality of the sensing spots (303, 503, 603, 703) arranged in the rectangular matrix pattern (325, 525, 625, 725), and which, viewed in the transverse direction, is arranged between adjacent two rows of the rectangular matrix pattern (325, 525, 625, 725).

13. Device according to claim 11 or claim 12, further comprising a rectangular absorber (206, 306, 506, 606, 706), wherein the rectangular absorber comprises a first transverse segment (260, 360, 560, 660, 760) and a second transverse segment (261, 361, 561, 661, 761), both extending in the transverse direction, as well as a first longitudinal segment (262, 362, 562, 662, 762) and a second longitudinal segment (263, 363, 563, 663, 763), wherein the first longitudinal segment and the second longitudinal segment extend in the longitudinal direction from the first transverse segment to the second transverse segment, and wherein the first transverse segment and the second transverse segment together with the first longitudinal segment and the second longitudinal segment form a closed rectangle, the closed rectangle enclosing the plurality of the sensing spots (203, 303, 503, 603, 703) arranged in the rectangular matrix pattern (225, 325, 525, 625, 725) and at least the corresponding portions of the optical coupler (204, 304, 504, 604, 704) and of the terminal optical decoupler (205, 305, 505, 605, 705).

14. Device (801) according to any one of claims 4 to 13, further comprising a further plurality of sensing spots (835), wherein the individual sensing spots of the further plurality of sensing spots (835) are arranged in a further rectangular matrix pattern (826), and wherein the rectangular matrix pattern (825) and the further rectangular matrix pattern (826) are arranged with respect to each other such that a respective column (C1-C5) of the rectangular matrix pattern (825) and a respective column (C1'-C4') of the further rectangular matrix pattern (826) are alternatingly arranged in the longitudinal direction, and wherein the individual sensing spots of the plurality of the sensing spots (803) of the rectangular matrix pattern (825) and the individual sensing spots of the further plurality of the sensing spots (835) of the further rectangular matrix pattern (826) are arranged in a zig-zag pattern when viewed in the longitudinal direction.

15. System for the detection of binding affinities, the system comprising a device (501) according to any one of the preceding claims, a light source (9) for emitting coherent light (90) of the predetermined wavelength, the device (501) and the light source (9) being arranged relative to each other to couple the coherent light (90) emitted by the light source (9) into the slab waveguide (502) of the device (501), and an optical detector (94) arranged to measure at a detection location (97) the intensity of a portion of the coherent light (91) decoupled by the decoupler grating of the at least one sensing spot (503) of the device (501).

16. System according to claim 15, wherein the device (501) is a device according to claim 3 including the at least one reference spot (570), and wherein the system further comprises an optical reference detector (95) arranged to measure at a reference detection location (98) the intensity of a predetermined portion (92) of the coherent light decoupled by the reference decoupler grating.
